Europäisches Patentamt

European Patent Office

Office européen des brevets

(19)

(11) **EP 1 185 901 B1**

(12) **FASCICULE DE BREVET EUROPEEN**

(45) Date de publication et mention
de la délivrance du brevet:
**11.12.2002 Bulletin 2002/50**

(51) Int Cl.7: **G02F 1/35**, H01S 3/00,
G02F 1/00

(21) Numéro de dépôt: **00949541.7**

(22) Date de dépôt: **14.06.2000**

(86) Numéro de dépôt international:
**PCT/FR00/01649**

(87) Numéro de publication internationale:
**WO 00/077891 (21.12.2000 Gazette 2000/51)**

(54) **PROCEDE ET DISPOSITIF DE MISE EN FORME PROGRAMMABLE DU PROFIL TEMPOREL
D'IMPULSIONS OPTIQUES QUASI-MONOCHROMATIQUES**

VERFAHREN UND VORRICHTUNG ZUR FORMUNG DES ZEITLICHEN PROFILS OPTISCHER
QUASIMONOCHROMATISCHER PULSE

METHOD AND DEVICE FOR PROGRAMMABLE SHAPING OF A TIME PROFILE FOR
QUASI-MONOCHROMATIC OPTICAL PULSES

(84) Etats contractants désignés:
**AT BE CH CY DE DK ES FI FR GB GR IE IT LI LU
MC NL PT SE**

(30) Priorité: **15.06.1999 FR 9907541**

(43) Date de publication de la demande:
**13.03.2002 Bulletin 2002/11**

(73) Titulaire: **COMMISSARIAT A L'ENERGIE
ATOMIQUE
75752 Paris Cédex 15 (FR)**

(72) Inventeurs:
• **RAOULT, Fabrice
F-91100 Corbeil-Essonnes (FR)**
• **HUSSON, Daniel
F-91330 Yerres (FR)**
• **ROUYER, Claude
F-94310 Orly (FR)**
• **SAUTERET, Christian
F-75020 Paris (FR)**
• **MIGUS, Arnold
F-92330 Sceaux (FR)**

(74) Mandataire: **Weber, Etienne Nicolas et al
c/o Brevatome,
3, rue du Docteur Lancereaux
75008 Paris (FR)**

(56) Documents cités:
• **RAOULT, F. ET AL.: "Efficient frequency tripling
of 1.06 mu m, 300-fs chirped pulses"
CONFERENCE ON LASERS AND
ELECTRO-OPTICS EUROPE - TECHNICAL
DIGEST, 8 mai 1998 (1998-05-08), page 523
XP002131742**
• **RAOULT F ET AL: "EFFICIENT GENERATION OF
NARROW-BANDWIDTH PICOSECOND PULSES
BY FREQUENCY DOUBLING OF
FEMTOSECOND CHIRPED PULSES" OPTICS
LETTERS,US,OPTICAL SOCIETY OF AMERICA,
WASHINGTON, vol. 23, no. 14, 15 juillet 1998
(1998-07-15), pages 1117-1119, XP000783057
ISSN: 0146-9592**
• **"Shaping Of Nanosecond Linearly Chirped
Pulses" LLE REVIEW, VOL. 53, PARAGRAPHE
1.F, OCTOBRE-D CEMBRE 1992, page 38-55
XP002131743 cité dans la demande**

## Description

Domaine technique

La présente invention concerne un procédé et un dispositif de mise en forme programmable du profil temporel d'impulsions optiques quasi-monochromatiques.

Etat de la technique antérieure

Une mise en forme du profil temporel de l'amplitude d'impulsions optiques est nécessaire pour certaines applications utilisant des sources laser impulsionnelles. On peut citer, par exemple, le domaine des lasers de puissance, ou le domaine des télécommunications, où il est nécessaire de mettre en forme le profil d'impulsions dans le domaine temporel avant de transmettre une information.

Un procédé de mise en forme du profil temporel d'impulsions optiques cherche à résoudre simultanément différents critères :

- Mettre en forme ce profil temporel avec une bonne résolution, de préférence 100 à 1 000 points sur toute la durée d'une impulsion, chaque point pouvant atteindre le domaine des femtosecondes.
- Etre programmable, c'est-à-dire permettre un changement de la forme de l'impulsion à la demande et rapidement, par exemple de manière automatique.
- Etre compatible avec la production d'impulsions possédant un spectre aussi étroit que la limite de Fourier des impulsions créées.
- Produire des impulsions accordables en longueur d'onde.
- Ne pas provoquer trop de pertes en énergie.

Il existe fondamentalement deux approches générales pour mettre en forme le profil temporel d'une impulsion laser. La première repose sur des méthodes essentiellement optiques. La deuxième consiste à transposer les signaux électroniques en signaux optiques, les procédés correspondants utilisant des systèmes électro-optiques ou acousto-optiques.

***Procédés optiques***

• *Procédé de mise en forme temporelle par modulation spectrale*

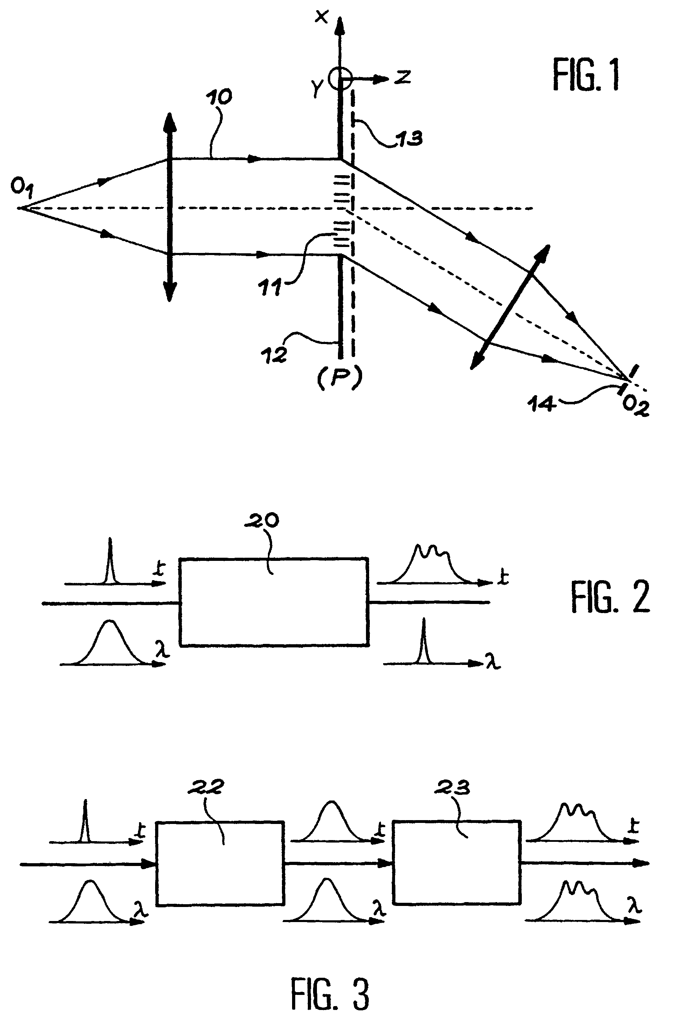

Un tel procédé purement optique de modulation est décrit dans le document référencé [1] en fin de description. Dans ce procédé, comme illustré sur la figure 1, un faisceau lumineux 10 issu d'un point source $O_1$, collimaté, se diffracte sur un réseau 11 pour être focalisé ensuite en un point $O_2$. La pupille 12 se trouve dans le plan P du réseau 11. Lorsqu'une impulsion brève diffracte à travers la pupille dans une direction donnée, il est possible de construire un profil temporel h(t) en appliquant une fonction primitive de h(t) comme fonction de transmittance, à l'aide d'un masque 13, dans le plan de la pupille 12 suivant la direction x. Un filtre spatial 14 est placé au point $O_2$ afin d'obtenir un faisceau homogène spectralement. Un tel dispositif est similaire à un spectromètre. La résolution temporelle est identique à la durée de l'impulsion brève injectée. La durée de l'impulsion de sortie est égale au retard temporel relatif maximal de chacun des rayons du faisceau qui couvre la pupille 12 dans le plan P.

Ce procédé permet d'obtenir de bonnes performances de mise en forme de profil temporel, notamment le nombre de points souhaités. Il est programmable : il suffit de placer un filtre spatial variable dans le plan de la pupille. Il produit des impulsions quasi-monochromatiques. Il permet, de plus, de produire une longueur d'onde accordable. En revanche, il possède un rendement très faible en énergie, de l'ordre de l'inverse du nombre de points résolus.

• *Procédé de mise en forme temporelle par transformée de Fourier*

Les champs dans le domaine fréquenciel et dans le domaine temporel sont liés par la transformée de Fourier E(ν)=TF[E(t)].

Si l'on veut que le profil temporel A(t) de l'impulsion réponde aux limites de Fourier, le champ doit posséder une phase linéaire avec la variable spectrale. L'impulsion est alors quasi-monochromatique. En agissant sur l'amplitude et la phase de l'impulsion incidente, il est possible de modifier le profil temporel de celle-ci. Le masque spectral M(ν) en amplitude et en phase doit alors satisfaire la relation :

$$\tilde{E}_0(v)M(v)=TF[A(t)\exp(i\omega_0 t)]\ ,$$

où $\tilde{E}_0(v)$ est le champ spectral incident du dispositif. Le procédé consiste donc en une simple sélection spectrale (en amplitude et en phase) à condition que le champ spectral incident comporte toutes les composantes spectrales du champ à produire (c'est-à-dire si |M(ν|<1).

Dans le dispositif de la figure 2, on part d'une impulsion courte possédant un spectre large. On modifie l'amplitude spectrale en utilisant un dispositif de sélection spectrale 20 formé de filtres spectraux d'amplitude et de phase. On obtient alors un profil temporel qui est la transformée de Fourier de l'amplitude spectrale que l'on a mise en forme dans le plan spectral.

On peut remarquer que la sélection spectrale s'effectue de manière similaire pour la majorité des systèmes optiques. Il suffit de placer un filtre spatial dans un plan particulier du dispositif de sélection spectrale. Il est alors possible d'obtenir une mise en forme programmable en utilisant un système de transmission variable spatial.

Ce procédé de mise en forme temporelle par transformée de Fourier donne de bons résultats en nombre de points résolus puisque l'on peut atteindre les résolutions demandées. Il est également programmable puisqu'il utilise la sélection spectrale. Ce procédé permet d'engendrer un spectre étroit, et la longueur d'onde est de plus accordable : il suffit de déplacer le masque dans le plan spectral pour changer la longueur d'onde. La durée de l'impulsion est variable, néanmoins elle est dépendante de la largeur spectrale de l'impulsion produite (par l'intermédiaire de la transformée de Fourier). On ne peut donc pas obtenir des impulsions longues. Le principal inconvénient d'un tel procédé est en fait le rendement énergétique. En effet la mise en forme temporelle avec une bonne résolution dans le plan spectral nécessite de grandes pertes en énergie si l'on veut obtenir un spectre étroit, puisque l'on doit couper une grande partie du spectre. Ce procédé est, en conséquence, très peu utilisé.

• *Procédé de mise en forme temporelle d'impulsions à dérive de fréquence*

Un tel procédé est décrit dans le document référencé [2]. Le schéma de principe de ce procédé est illustré sur la figure 3. Les impulsions sont représentées schématiquement afin de montrer leur durée et leur largeur spectrale. On peut réaliser la mise en forme temporelle de manière totalement optique en utilisant des impulsions courtes. De telles impulsions qui possèdent un spectre large sont dispersées en fréquence après passage dans un dispositif dispersif 22, tel que celui décrit dans le document [3]. La dispersion des longueurs d'onde s'effectue alors temporellement, ce qui revient à étaler les longueurs d'onde composant le spectre large dans le temps. En sélectionnant les longueurs d'onde à l'aide d'un dispositif de sélection spectrale 23, on effectue la mise en forme de profil temporel.

On peut obtenir à l'aide de ce procédé une très bonne résolution avec un nombre de points résolus supérieur à 100. Ce procédé permet une mise en forme de profil temporel programmable : il consiste en effet à transférer la mise en forme dans le domaine spectral et il existe un grand nombre de systèmes de sélection spectrale programmables, tel que celui décrit dans le document [4]. La perte en énergie provoquée par un tel procédé est minimale, on ne perd que les composantes de l'impulsion essentielles pour sa mise en forme de profil temporel. Cependant l'impulsion mise en forme possède un spectre large.

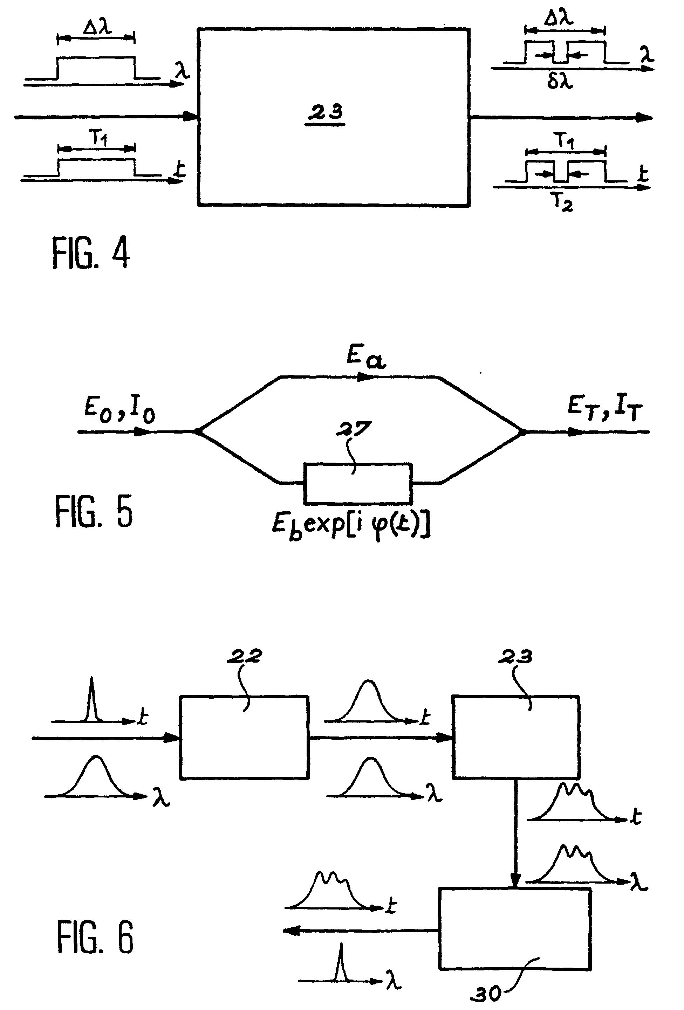

On peut remarquer que les procédés utilisant un dispositif de sélection spectrale 23 pour effectuer la mise en forme du profil temporel d'une impulsion, dont l'action est schématisée sur la figure 4, fonctionnent tous en général sur la base d'un spectromètre. Le pouvoir de résolution est, par définition, le rapport entre la longueur d'onde centrale du dispositif $\lambda$ et la résolution spectrale $\delta\lambda$ : $R=\lambda/\delta\lambda$. Le nombre P de points résolus en temps est défini par $T_1/T_2$ et est donné par la relation : $P=\frac{\Delta\lambda}{\lambda}\frac{\lambda}{\delta\lambda}$. La quantité $\Delta\lambda/\lambda$ est une caractéristique de l'impulsion laser incidente au système. L'ordre de grandeur des quantités $\Delta\lambda/\lambda$ accessibles est de $10^{-2}$ à $10^{-1}$ selon les longueurs d'onde utilisées. Le pouvoir de résolution est classiquement de l'ordre de $10^4$. Ce type de dispositif permet donc bien d'atteindre un nombre de points résolus compris entre 100 et 1 000.

### *Procédés électro-optiques*

Ces procédés effectuent une mise en forme de profil temporel en transposant les signaux électroniques en signaux optiques et en effectuant des interférences entre une partie non modifiée d'une impulsion optique et une partie modifiée de celle-ci à l'aide d'un signal électrique.

Le schéma d'un tel procédé est illustré sur la figure 5. Un champ $E_o$ d'intensité $I_0$ est séparé en deux parties. Les deux champs $E_a$ et $E_b$ suivent un trajet différent, l'un des deux champs subissant un déphasage dans un déphaseur 27. On effectue alors leur somme afin de les faire interférer. Le déphasage varie avec le temps. On a ainsi la relation : $E_T = E_a + E_b e^{i\varphi(t)}$. En éclairement on obtient alors la relation : $I_T = \frac{I_0}{2}[1+\cos\varphi(t)]$.

Ce déphasage peut s'appliquer à l'aide d'un élément électro-optique, par exemple en utilisant l'effet Pockels, comme décrit dans le document référencé [5]. Il existe plusieurs moyens pour former le signal électrique appliqué, mais ceux-ci possèdent tous les mêmes limitations. En effet la gamme des fréquences accessibles par un système électrique est limitée à quelques gigahertz, ce qui est nettement inférieur aux fréquences optiques (environ 100 THz). Un tel procédé a donc toujours une résolution limitée : quelques dizaines de points au maximum sur toute la durée de l'impulsion pour des impulsions nanoseconde par exemple. Il est, de plus, extrêmement difficile d'obtenir les formes désirées de signal électrique. Les méthodes programmables existantes reposent sur la somme de plusieurs signaux électriques. On utilise par exemple la somme de plusieurs gaussiennes ou de fonctions d'Heavyside de différentes intensités pour créer le signal voulu, mais cela se solde toujours par des modulations d'amplitudes résiduelles sur le signal optique. La seule alternative pour améliorer ces modulations et la résolution est d'augmenter le nombre de composants électro-optiques, ce qui ajoute de nombreux inconvénients en terme de coût, d'encombrement et de facilité d'utilisation. Il est également possible de limiter les modulations en filtrant le signal électrique. Cependant un tel filtrage réduit la résolution du procédé. Il faut alors parvenir à un compromis entre la résolution désirée et les modulations.

Ces procédés électro-optiques sont néanmoins les plus utilisés. Ils fonctionnent avec des impulsions possédant un spectre étroit et n'importe quelle durée si elle reste supérieure à la nanoseconde. Ils sont également programmables en jouant sur le signal électrique. De plus ils n'occasionnent pas de pertes énergétiques trop importantes. Cependant ces procédés ne rendent pas la longueur d'onde accordable et restent limités en résolution.

Aucun des procédés de l'art connu ne permet donc de- vérifier tous les critères souhaités. Les procédés optiques permettent en général d'obtenir de très bonnes performances en terme de résolution, mais ils ne peuvent être utilisés qu'avec des impulsions possédant un spectre large, et sont onéreux en énergie. Les procédés électro-optiques permettent de créer des impulsions monochromatiques, mais ne possèdent pas les performances d'une mise en forme toute optique.

Un article de l'art connu intitulé "Efficient frequency tripling of 1.06 $\mu$m/300 fs chirped pulses" de F. Raoult et al., publié dans CLEO'98 page 523 permet de tripler en fréquence des impulsions à large bande en utilisent une configuration d'amplification d'impulsion comprimée (CPA). Comme illustré dans la réalisation de la figure 2, deux impulsions comprimées différemment dans un système CPA ou provenant d'une sortie étendue et à fractionnement de rayons d'un amplificateur CPA, sont envoyées sur deux étages de paires de réseaux différent.

Un article de l'art connu intitulé "Efficient generation of narrow-bandwidth picosecond pulses by frequency doubling of femtosecond chirped pulses" de F. Raoult et al., publié dans Optics Letters, volume 23 (1998) pages 1117 à 1119, décrit la génération d'impulsions en picosecondes à faible largeur de bande par mélange en fréquence de deux impulsions compressées opposées à large bande dans un cristal de doublage de type I.

Le procédé de l'invention a pour objectif de résoudre les problèmes posés par les procédés de l'art connu, en permettant de satisfaire l'ensemble des différents critères énoncés précédemment.

Exposé de l'invention

La présente invention concerne un procédé optique de mise en forme programmable du profil temporel d'impulsions optiques quasi-monochromatiques comprenant les étapes suivantes :

- on utilise deux impulsions d'entrée à spectre large,
- on répartit chaque composante spectrale de ces deux impulsions à spectre large dans le temps et on obtient deux impulsions allongées en conservant la largeur spectrale ;
- on met en forme l'une de ces deux impulsions spectralement et par conséquent temporellement ;

caractérisé en ce qu'il comprend une étape ultérieure dans laquelle on effectue un mélange des fréquences de ces deux impulsions en effectuant la différence des fréquences de ces deux impulsions, de manière à convertir le spectre large en spectre étroit en conservant la mise en forme temporelle.

On peut de plus effectuer une adaptation en fréquence de l'une des deux impulsions avant le mélange en fréquence.

Dans un exemple de réalisation :

- on utilise deux impulsions d'entrée dont les dérives de fréquences sont de mêmes signes, ces deux impulsions étant telles que : $\omega_1(t)=\omega_0+2\varphi'(t)$ et $\omega_2(t)=\omega_0+\varphi'(t)$ ;
- on met en forme temporellement l'une des deux impulsions ;
- on convertit la seconde impulsion vers sa seconde harmonique ;
- on effectue la différence de fréquences des deux impulsions afin d'obtenir une impulsion monochromatique, mise en forme temporellement telle que : $\omega_3(t)=\omega_2(t)-\omega_1(t)=\omega_0$.

Le procédé de l'invention répond complètement aux exigences demandées. Il profite en fait des excellentes performances de mise en forme du profil temporel optique. Il parvient à produire une impulsion à spectre étroit, et de plus il bénéficie d'une fonction très avantageuse : il offre en effet la possibilité d'obtenir une longueur d'onde variable sur quelques manomètres. De plus, son rendement énergétique est bon, car il dépend principalement de la conversion de fréquence, et l'impulsion peut être adaptée (en terme d'intensité) au processus de conversion de façon à obtenir un excellent rendement.

La présente invention concerne également un dispositif optique de mise en forme programmable du profil temporel d'impulsions optiques quasi-monochromatiques comprenant :

- une première voie comprenant un premier dispositif dispersif suivi d'un dispositif de sélection spectrale ;
- une deuxième voie comprenant un second dispositif dispersif ;
- un dispositif de mélange des signaux de sorties de ces deux voies, dans lequel on effectue une différence de fréquences qui permet de réaliser une conversion spectre large en spectre étroit ;
- et éventuellement un dispositif d'adaptation de fréquence disposé sur l'une des deux voies.

Brève description des dessins

La figure 1 illustre le schéma de principe de la mise en forme du profil temporel par modulation spectrale de l'art antérieur.

La figure 2 illustre le schéma de principe de la mise en forme de profil temporel par transformée de Fourier de l'art antérieur.

La figure 3 illustre le schéma de principe de la mise en forme de profil temporel d'impulsions à dérive de fréquence de l'art antérieur.

La figure 4 illustre le principe de fonctionnement des systèmes de mise en forme de profil temporel par sélection spectrale de l'art antérieur.

La figure 5 illustre le schéma de principe de la mise en forme de profil temporel par des procédés électro-optiques de l'art antérieur.

La figure 6 illustre le principe de mise en forme de profil temporel selon l'invention.

La figure 7 illustre le procédé de mise en forme de profil temporel selon l'invention.

Les figures 8 à 14 illustrent différents exemples de mise en oeuvre du procédé de l'invention.

Exposé détaillé de modes de réalisation

Le principe de l'invention consiste à adapter le procédé de mise en forme de profil temporel d'impulsions à dérive de fréquence qui comporte :

- une étape de dispersion de fréquence ;
- une étape de sélection spectrale ; en les faisant suivre d'une étape de conversion spectre large-spectre étroit.

Ainsi sur la figure 6 un dispositif dispersif 22 permet de répartir dans le temps une impulsion d'entrée qui possède un spectre large et une faible durée pour obtenir une impulsion allongée, tout en conservant la largeur spectrale. Un dispositif de sélection spectrale 23 permet alors de mettre en forme l'impulsion spectralement et donc temporellement. Un dispositif de conversion 30 permet ensuite d'obtenir un spectre étroit à partir du spectre large en conservant la mise en forme temporelle.

Le procédé de l'invention reprend donc bien le principe de la mise en forme de profil temporel d'une impulsion à dérive de fréquence, en l'adaptant à la conversion de spectre large en spectre étroit. On bénéficie, malgré tout, des excellentes performances du procédé de mise en forme temporelle d'impulsions à dérive de fréquence. On obtient ainsi le même nombre de points résolus (de 100 à 1 000 selon les configurations). Le nombre de points est d'ailleurs d'autant plus grand que le spectre est large. On peut également le programmer de façon identique.

L'étape de conversion spectre large en spectre étroit permet d'obtenir des impulsions possédant un spectre étroit uniquement limité par la transformée de Fourier des fronts de montée que l'on veut créer. La conversion permet de disposer d'une impulsion réglable sur une plage dépendant de la largeur spectrale des impulsions à l'origine.

Pour utiliser le dispositif de conversion permettant d'obtenir une impulsion à spectre étroit à partir d'une impulsion à spectre large, il est nécessaire de modifier le dispositif de mise en forme temporelle d'impulsion à dérive de fréquence. On va pour cela créer deux impulsions à spectre large.

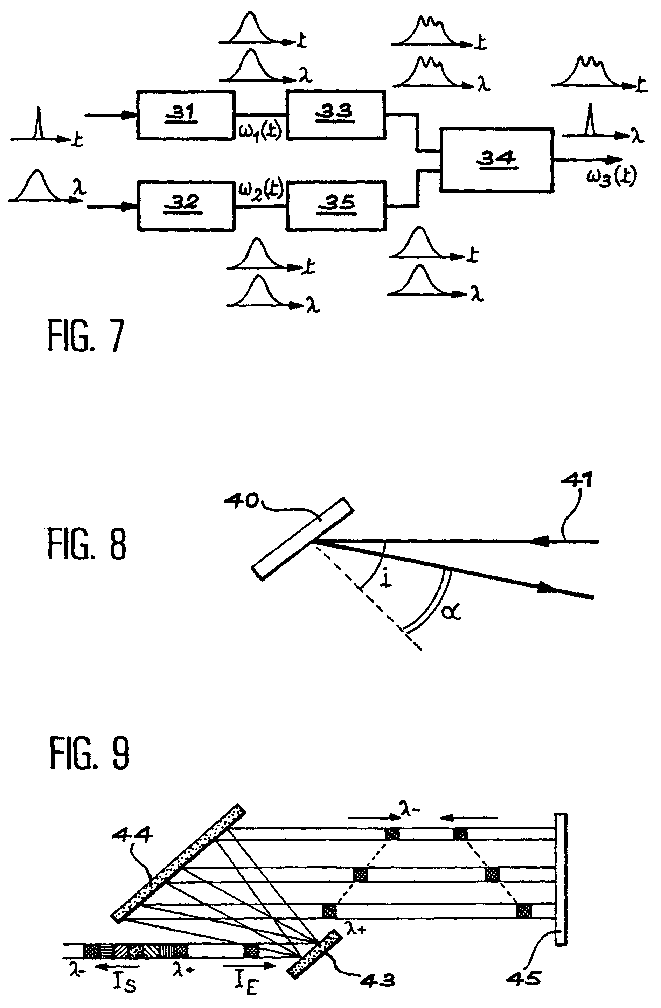

Comme illustré sur la figure 7, on considère donc deux impulsions courtes allongées à l'aide de systèmes dispersifs 31 et 32 qui ajoutent chacun une phase spectrale aux impulsions. On peut alors obtenir une expression de la phase introduite par les systèmes dispersifs en fonction du temps $\varphi_i(t)$. On peut introduire l'expression de la fréquence instantanée de ces deux impulsions : $\omega_1(t)=\omega_{10}+\varphi_1'(t)$ et $\omega_2(t)=\omega_{20}+\varphi_2'(t)$. En notant $\varphi_i'(t)$ la dérivé de la phase par rapport au temps. Les deux impulsions possèdent un spectre large. On met en forme l'une des deux impulsions à l'aide d'un dispositif à sélection spectrale 33. Pour obtenir une impulsion monochromatique on effectue alors la somme ou la différence des fréquences dans un dispositif de mélange de fréquence 34, tel que décrit précédemment, seule la différence faisant partie de la présente invention telle que revendiquée. On a alors $\omega_3(t)=\omega_1(t)\pm\omega_2(t)$ $=\omega_{10}+\varphi_1'(t)\pm(\omega_{20}+\varphi_2'(t))$.

La fréquence de l'onde produite par le dispositif de conversion de fréquence 34 est telle que : $\omega_3(t)$ $=(\omega_{10}\pm\omega_{20})+\varphi_1'(t)\pm\varphi_2'(t)$.

Dans le procédé de l'invention on adapte les dérives de fréquences des deux impulsions afin de pouvoir reconstituer un spectre étroit. On choisit la dérive de fréquence, ce qui signifie que l'on adapte les termes de phase introduits par les systèmes dispersifs pour que la somme $\varphi_1'(t)\pm\varphi_2'(t)$ soit nulle. On obtient donc une impulsion monochromatique de fréquence $\omega_3(t)=$ $(\omega_{10}\pm\omega_{20})$. En utilisant ce procédé on conserve la mise en forme du profil temporel effectuée sur l'impulsion.

On peut ajouter également un dispositif d'adaptation en fréquence 35 qui est utilisé pour modifier la fréquence de l'impulsion, afin d'obtenir la pulsation désirée $\omega_3$ en sortie. Ce dispositif 35 n'est pas indispensable dans tous les cas. On peut de plus le placer en d'autres emplacements : par exemple avant le premier 31 ou le second 32 dispositifs dispersifs, après le premier dispositif 32 dispersif, avant ou après le dispositif de sélection spectrale 33.

On va à présent considérer un exemple de mise en oeuvre du procédé de l'invention.

EXEMPLE DE REALISATION

• *Dispositifs dispersifs à réseaux 31 et 32*

Pour manipuler les dérives en fréquences des impulsions, on utilise des dispositifs dispersifs à réseaux, comme décrit dans le document [6].

Les dispositifs dispersifs classiques mis au point pour comprimer et étirer les impulsions courtes peuvent ainsi utiliser des réseaux en réflexion. Un tel réseau 40, tel qu'illustré sur la figure 8, est un composant optique qui disperse angulairement les différentes longueurs d'onde d'un faisceau incident 41. La loi de dispersion des réseaux fonctionnant en réflexion pour un faisceau dont la direction de propagation est perpendiculaire à la direction définie par les traits des réseaux est la suivante : sin(i)+sin($\alpha(\lambda)$)=p N$\lambda$. Dans cette expression, i est l'angle d'incidence sur le réseau, $\alpha$ est l'angle de diffraction, p est un entier qui donne l'ordre de la diffraction. On fait généralement travailler les réseaux au premier ordre de diffraction. La densité de traits par unité de longueur du réseau est notée N. La longueur d'onde est notée $\lambda$.

Un dispositif dispersif de ce type, composé de deux réseaux 43 et 44, est illustré sur la figure 9. Le premier réseau 43 disperse les fréquences de l'impulsion d'entrée courte $I_E$ ; le second réseau 44, parallèle au premier, annule cette dispersion. Un double passage dans l'ensemble, grâce au miroir 45, permet d'obtenir une impulsion laser allongée homogène $I_s$.

Les composantes spectrales monochromatiques d'une impulsion à spectre large entrent en même temps dans le dispositif. Chaque composante parcourt un chemin différent des autres. Elle acquiert alors un retard temporel et toutes les composantes se trouvent ainsi réparties en temps en sortie du système.

### • Dispositifs de sélection spectrale à réseaux 33 (ligne à dispersion nulle)

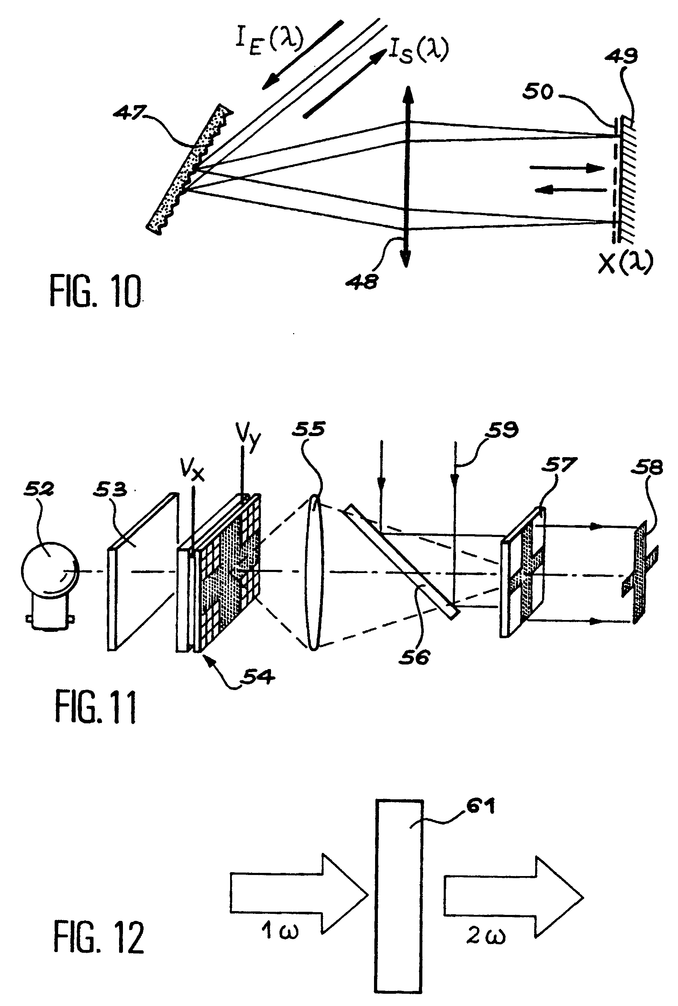

Pour agir sur le spectre de l'impulsion, on utilise un dispositif de sélection spectrale composé d'un réseau 47, d'une lentille 48, d'un miroir 49, et d'un masque 50, comme illustré sur la figure 10. Ce dispositif permet de transférer l'information spectrale contenue dans l'impulsion dans le domaine temporel. En effet, le mode de fonctionnement de ce dispositif est le suivant : le réseau 47 est un dispositif dispersif. Il établit un codage angulaire des longueurs d'onde. La lentille 48 dont le plan focal objet est confondu avec le réseau 47 transfère le codage angulaire en codage spatial dans le plan focal image. En associant les deux éléments on obtient au plan focal de la lentille (plan spectral) une répartition spatiale de l'intensité image de l'intensité spectrale. Ce dispositif est équivalent à un spectromètre.

Dans le plan spectral il est possible de sélectionner les fréquences en utilisant le masque 50 de mise en forme spatiale en amplitude caractérisé par une transmission T(x) en fonction de la variable spatiale. $I_{sortie}(\lambda) = I_{entrée}(\lambda) . T[x(\lambda)]$.

Pour retrouver l'impulsion de mise en forme temporellement, il suffit de lui faire parcourir le même chemin en sens inverse. On peut par exemple placer le miroir 49 au niveau du plan spectral.

Pour réaliser la sélection spatiale dans le plan spectral de manière programmable, on peut utiliser un dispositif de mise en forme spatiale variable, tel que décrit dans le document référencé [7]. Ce dispositif fonctionne suivant le principe suivant : une image créée sur ordinateur est adressée à un écran matriciel à cristaux liquides. Celui-ci est projeté sur une valve photoconductrice dont la transmission optique varie en fonction de l'éclairement reçu. Le faisceau laser traversant la valve acquiert une répartition d'intensité proportionnelle à l'image initiale engendrée. La figure 11 montre le schéma de principe du système. Sur cette figure sont illustrés une source incohérente 52, un filtre 53, un écran LCD matriciel à adressage électrique 54, une lentille 55, un miroir dichroïque 56, un modulateur à adressage optique 57, le profil du faisceau résultant 58, et le laser à moduler 59

La valve photoconductrice est ainsi réalisée par une couche de cristaux liquides orientés parallèlement les uns aux autres. Sous l'effet d'un éclairement, les cristaux changent d'orientation créant ainsi une biréfringence locale. Une onde incidente polarisée linéairement va donc subir des modifications locales de polarisation. Après repolarisation de l'onde ainsi créée, des modulations d'amplitude peuvent être observées.

### • Dispositif d'adaptation en fréquence 35

Pour réaliser l'adaptation en fréquence, il est possible de convertir la fréquence de l'impulsion vers son harmonique en utilisant par exemple un cristal de KDP 61. A partir d'une impulsion de fréquence 1$\omega$, on peut ainsi obtenir selon les besoins une impulsions à 2$\omega$. Le schéma de principe d'un tel fonctionnement est illustré sur la figure 12.

### • Dispositif de mélange de fréquence 34

On va considérer, ci-dessous, deux exemples de réalisation d'un tel dispositif de mélange de fréquences, seul le second exemple faisant partie de l'invention telle que revendiquée.

### 1- Cas de la mise en forme du profil temporel en amplitude d'une impulsion à une longueur d'onde moitié de la longueur d'onde incidente

Dans cet exemple, on effectue une somme de fréquences dans le dispositif de mélange de fréquences 34. Les dérives de fréquences des deux signaux d'entrée dans ce dispositif sont de signes opposés. On choisit les deux impulsions telles que $\omega_1(t)=\omega_0+\varphi'(t)$ et $\omega_2(t)=\omega_0-\varphi'(t)$. La première impulsion est ensuite mise en forme temporellement à l'aide d'un dispositif de sélection spectrale 31. Dans ce cas, on n'utilise pas de dispositif d'adaptation en fréquence. On effectue la somme de fréquence des deux impulsions dans le module de mélange de fréquences 34 afin d'obtenir l'impulsion désirée monochromatique et mise en forme temporellement. On effectue l'opération : $\omega_3(t)=\omega_2(t)+\omega_1(t)=2\omega_0+\varphi'(t)-\varphi'(t)=2\omega_0$.

On obtient alors naturellement une onde monochromatique à la fréquence harmonique possédant les mêmes caractéristiques de mise en forme temporelle que les signaux d'entrée.

On peut ainsi partir d'une impulsion à 1053 nm.

On sépare celle-ci en deux parties. On met en forme les dérives de fréquence des deux impulsions ainsi créées. Puis on utilise un cristal de KDP type I ($\theta=41°187$) en configuration doubleur autour de un micromètre.

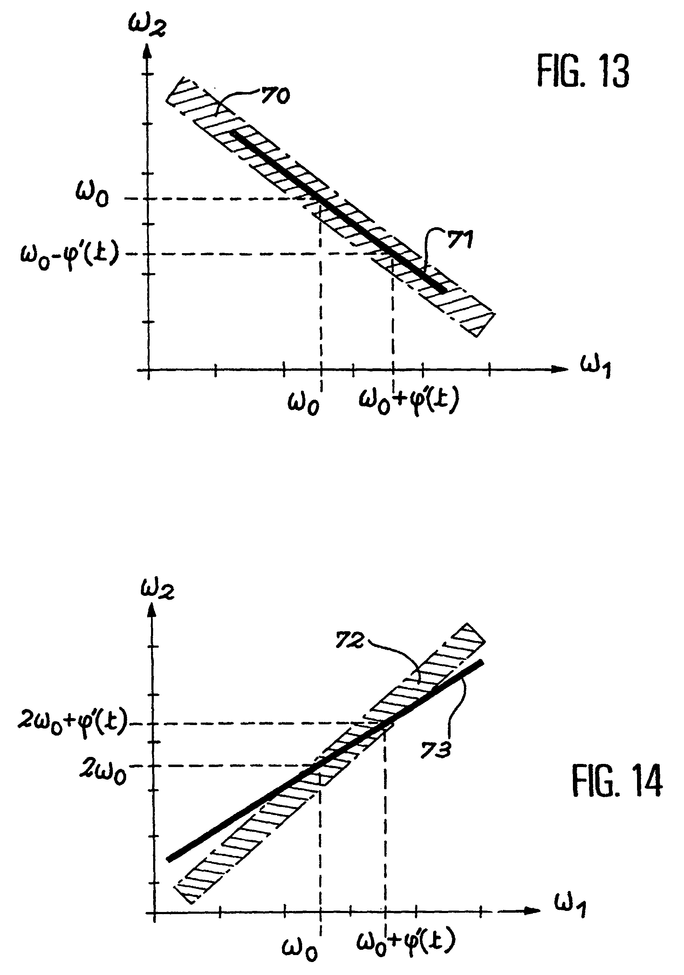

Comme illustré sur la figure 13, dans l'espace des fréquences ($\omega_1$, $\omega_2$), la zone d'accord de phase 70 telle que $\Delta K.L<<2\pi$ (L :épaisseur du cristal), avec $\Delta K=K_3-K_1-K_2$ pour une sommation de fréquences et $\Delta K=K_3+K_2-K_1$ pour une différence de fréquences où $K_i$ est le vecteur d'onde de l'onde i, est à peu près linéaire et possède une pente de -1. Cette pente est exactement celle qu'il faut pour créer une onde monochromatique. Il suffit par conséquent de placer les longueurs d'onde en adaptant leur dérive de fréquence selon cette direction (droite 71) pour obtenir une impulsion à $2\omega$ (0,5 nm) monochromatique.

### 2- Cas de la mise en forme du profil temporel en amplitude d'une impulsion à une longueur d'onde identique à la longueur d'onde de l'impulsion incidente

On effectue alors une différence de fréquences dans le dispositif de mélange de fréquences 34. Dans ce cas, on introduit une dérive de fréquence de même signe sur les deux impulsions. la dérive de fréquence est adaptée afin de pouvoir recréer ensuite une impulsion à spectre étroit. On choisit donc : $\omega_1(t)$ =$\omega_0+2\varphi'(t)$ et $\omega_2(t)=\omega_0+\varphi'(t)$. La première impulsion est ensuite mise en forme temporellement à l'aide d'un dispositif de sélection spectrale 33, tandis que la seconde est convertie en fréquence vers sa seconde harmonique dans le module adaptation en fréquence. Sa fréquence instantanée est telle que : $\omega_2(t)=2\omega_0+2\varphi'(t)$. Enfin dans le dispositif de mélange de fréquences 34, on effectue la différence de fréquences des deux impulsions afin d'obtenir l'impulsion désirée monochromatique et mise en forme temporellement. On effectue donc l'opération : $\omega_3(t)=\omega_2(t)-\omega_1(t)=2\omega_0+2\varphi'(t)-\omega_0-2\varphi'(t)=\omega_0$.

On obtient donc naturellement une onde monochromatique possédant les mêmes caractéristiques de mise en forme temporelle que les ondes l'ayant créée.

On peut ainsi partir d'une impulsion à 1053 nm. On sépare celle-ci en deux parties. On met en forme les dérives de fréquences des deux impulsions ainsi créées et on convertit l'une des deux vers sa seconde harmonique. Enfin, on utilise un cristal de KDP type II ($\theta=59°228$) en configuration doubleur autour de un micromètre. On ne se trouve pas en accord de phase pour toutes les longueurs d'onde mais on utilise le fait que l'on est proche de la longueur d'onde non critique et donc que l'acceptance spectrale du KDP est grande pour la gamme de longueurs d'onde.

Comme illustré sur la figure 14, dans l'espace des fréquences ($\omega_1$, ($\omega_2$), la zone d'accord de phase 72 telle que $\Delta K.L<<2\pi$ est à peu près linéaire et possède une pente de 1,7. Pour créer une impulsion monochromatique il aurait fallu une pente de 1. On utilise cependant la grande acceptance spectrale du cristal. En plaçant les couples de longueurs d'onde sur la droite 73 de pente 1, on se trouve encore dans le domaine où le rendement de conversion de fréquence n'est pas affecté par le désaccord de phase.

REFERENCES

[1] « Shaping Of Short Laser Pulses By Passive Optical Fourier Techniques » de B. Colombeau, M. Vampouille et C. Froehly (Optics Communications, volume 19, numéro 2, pages 201-204, novembre 1976)

[2] « Shaping Of Nanosecond Linearly Chirped Pulses » (LLE review, Quaterly Report, Octobre-Décembre 1992, LLE Review, volume 53, paragraphe 1.F)

[3] « Negative Group-Velocity Dispersion Using Refraction » de O.E. Martinez, J.P. Gordon et R.L. Fork (Journal of Optical Society of America, volume 1, numéro 10, octobre 1984, pages 1003 à 1006)

[4] « Liquid Crystal Light Valve Using Bulk Monocrystalline $Bi_{12}SiO_{20}$ As The Photoconductive Material » de P. Aubourg, J.P. Huignard, M. Hareng et R.A. Mullen (Applied Oprics, volume 21, numéro 20, 15 octobre 1982)

[5] « Amplitude Modulation Of Kilowatt Laser Pulses With LNO Pockels Cells Experiments And Results On Phebus Facility » de E. Bar, R. Bailly-Salins, F. Boubal et N. Boyer (Solid State Lasers For Application (SSLA) To Inertial Confinement Fusion (ICF), Third International Conference, 7-12 juin 1998, Monterey, Californie, Book of abstracts)

[6] « Optical Pulse Compression With Diffraction Gratings » de Edmond B. Treacy (IEEE Journal Of Quantum Electronics, volume QE-5, numéro 9, septembre 1969)

[7] « Amplitude And Phase Coding Measurements Of A Liquid Crystal Television » de V. Laude, S. Maze, P. Chavel et Ph. Réfrégier (Optics Communications, volume 103, numéro 1-2, pages 33 à 38, 1er novembre 1993)

**Revendications**

1. Procédé optique de mise en forme programmable du profil temporel d'impulsions optiques quasi-monochromatiques comprenant les étapes suivantes :

   - on utilise deux impulsions d'entrée à spectre large,
   - on répartit chacune des composantes spectrales de ces deux impulsions à spectre large dans le temps et on obtient deux impulsions allongées en conservant la largeur spectrale ;

- on met en forme l'une des deux impulsions spectralement et par conséquent temporellement ;

**caractérisé en ce qu'**il comprend une étape ultérieure dans laquelle on effectue un mélange des fréquences de ces deux impulsions en effectuant la différence des fréquences de ces deux impulsions de manière à convertir le spectre large en spectre étroit en conservant la mise en forme temporelle.

2. Procédé selon la revendication 1, dans lequel on effectue une adaptation en fréquence de l'une des deux impulsions avant le mélange en fréquence.

3. Procédé selon la revendication 1, dans lequel :

   - on utilise deux impulsions d'entrée dont les dérives de fréquence sont de mêmes signes, ces deux impulsions étant telles que : $\omega_1(t) = \omega_0 + 2\varphi'(t)$ et $\omega_2(t) = \omega_0 + \varphi'(t)$ ;
   - on met en forme temporellement l'une des deux impulsions ;
   - on convertit la seconde impulsion vers sa seconde harmonique ;
   - on effectue la différence de fréquences des deux impulsions afin d'obtenir une impulsion monochromatique, mise en forme temporellement telle que : $\omega_3(t) = \omega_2(t) - \omega_1(t) = \omega_0$.

4. Dispositif optique de mise en forme programmable du profil temporel d'impulsions optiques quasi-monochromatiques comprenant :

   - une première voie comprenant un premier dispositif dispersif (31) suivi d'un dispositif de sélection spectrale (33) ;
   - une deuxième voie comprenant un second dispositif dispersif (32) ;

   **caractérisé en ce qu'**il comprend, en outre, un dispositif (34) de mélange des signaux de sorties de ces deux voies, dans lequel on effectue une différence de fréquences, qui permet de réaliser une conversion spectre large en spectre étroit (30).

5. Dispositif selon la revendication 4 comprenant un dispositif d'adaptation de fréquence (35) disposé sur l'un des deux voies.

6. Dispositif selon la revendication 4, dans lequel le dispositif de mélange de fréquences (34) comprend un cristal biréfringent.

**Patentansprüche**

1. Optisches Verfahren zur programmierbaren Formung des zeitlichen Profils quasimonochromatischer optischer Pulse, folgende Schritte umfassend:

   - man benutzt zwei Breitspektrum-Eingangspulse,
   - man verteilt jede der spektralen Komponenten dieser beiden Breitspektrum-Pulse über die Zeit und man erhält zwei langgestreckte Pulse, wobei die spektrale Breite beibehalten wird;
   - man formt einen der beiden Pulse spektral und folglich zeitlich;

   **dadurch gekennzeichnet,**
   **dass** es einen späteren Schritt umfasst, bei dem man eine Mischung der Frequenzen dieser beiden Pulse ausführt, wobei man die Differenz der Frequenzen dieser beiden Pulse durchführt, indem man das breite Spektrum in ein schmales Spektrum konvertiert und dabei die zeitliche Formung beibehält.

2. Verfahren nach Anspruch 1, bei dem man bei einem der beiden Pulse vor der Frequenzmischung eine Frequenzanpassung durchführt.

3. Verfahren nach Anspruch 1 mit folgenden Schritten:

   - man benutzt zwei Eingangspulse, deren Frequenzabweichungen dasselbe Vorzeichen haben, wobei diese beiden Pulse so sind, dass: $\omega_1(t) = \omega_0 + 2\varphi'(t)$ und $\omega_2(t) = \omega_0 + \varphi'(t)$;
   - man formt einen der beiden Pulse zeitlich;
   - man konvertiert den zweiten Puls zu seiner zweiten Harmonischen;
   - man führt die Frequenzdifferenz der beiden Pulse durch, um einen monochromatischen Puls zu erhalten, zeitlich so geformt, dass: $\omega_3(t) = \omega_2(t) - \omega_1(t) = \omega_0$.

4. Optische Vorrichtung zur programmierbaren Formung des zeitlichen Profils quasimonochromatischer optischer Pulse, umfassend:

   - einen ersten Kanal mit einer ersten Streuvorrichtung (31), gefolgt von einer spektralen Selektionsvorrichtung (33);
   - einen zweiten Kanal mit einer zweiten Streuvorrichtung (32);

   **dadurch gekennzeichnet,**
   **dass** sie außerdem eine Vorrichtung (34) zum Mischen der Ausgangssignale dieser beiden Kanäle umfasst, in der man eine Frequenzdifferenz durchführt, die ermöglicht, eine Breitspektrum-Schmalspektrum-Umsetzung (30) zu realisieren.

5. Vorrichtung nach Anspruch 4 mit einer Frequenzanpassungsvorrichtung (35), angeordnet in einem der beiden Kanäle.

**6.** Vorrichtung nach Anspruch 4, bei der die Frequenzmischvorrichtung (34) einen doppelbrechenden Kristall umfasst.

## Claims

**1.** Optical process for the programmable time profile shaping of quasi-monochromatic optical pulses, comprising the following stages:

- use is made of two wide spectrum input pulses,
- a time distribution takes place of each spectral component of these two wide spectrum pulses and two elongated pulses are obtained, retaining the spectral width,
- shaping takes place of one of these two pulses in a spectral and therefore time manner,

**characterized in that** it comprises a subsequent stage in which there is a mixing of the frequencies of these two pulses by forming the difference of the frequencies of said two pulses, so as to convert the wide spectrum into a narrow spectrum and whilst retaining the time shaping.

**2.** Process according to claim 1, wherein there is a frequency adaptation of one of the two pulses prior to frequency mixing.

**3.** Process according to claim 1, wherein

- two input pulses, whose frequency drifts have the same signs, are used, with these two pulses being such that: $\omega_1(t) = \omega_0 + 2\,\psi'(t)$ and $\omega_2(t) = \omega_0 + \psi'(t)$,
- one of the two pulses is time shaped,
- the second pulse is converted into its second harmonic,
- the difference of the frequencies of the two pulses is formed in order to obtain a time shaped, monochromatic pulse, such that $\omega_3(t) = \omega_2(t) - \omega_1(t) = \omega_0$.

**4.** Optical device for the programmable time shaping of quasi-monochromatic optical pulses, comprising:

- a first path that comprises a first dispersion device (31) followed by a spectral selection device (33),
- a second path that comprises a second dispersion device (32),
- a device (34) for mixing the output signals from these two paths and in which the difference of the frequencies is formed, so that a wide spectrum can be converted into a narrow spectrum,
- and, if appropriate, a frequency modulation device placed in one of the two paths (30).

**5.** Device according to claim 4, comprising a frequency adapting device (35) located on one of the two paths.

**6.** Device according to claim 4, wherein the frequency mixing device (34) comprises a birefringent crystal.

FIG. 1

FIG. 2

FIG. 3

FIG. 4

FIG. 5

$E_0, I_0$

$E_a$

$27$

$E_b exp[i \varphi(t)]$

$E_T, I_T$

FIG. 6

$22$

$23$

$30$

FIG. 7

FIG. 8

FIG. 9

$I_E(\lambda)$  $I_S(\lambda)$

47  49  50  48  $X(\lambda)$

## FIG. 10

$V_y$  55  59  57  58  52  53  $V_x$  54  56

## FIG. 11

61  $1\omega$  $2\omega$

## FIG. 12

FIG. 13

FIG. 14